# EUROPÄISCHE PATENTSCHRIFT

(11) **EP 0 450 363 B1**
(45) Veröffentlichungstag und Bekanntmachung des Hinweises auf die Patenterteilung: **06.10.1993**
(21) Anmeldenummer: 91103989.9
(22) Anmeldetag: 15.03.1991
(51) Int. Cl.: B21D 53/40, B23D 23/00, B23D 25/08, B23D 15/08, B26D 1/09, B26D 3/16

(54) **Vorrichtung zum Durchtrennen von vormontierten Bauteilen sowie hiermit durchzuführendes Verfahren**
Device for cutting pre-assembled component parts and procedure carried out herewith
Dispositif pour séparer des éléments pré-assemblés et procédé réalisé par ce dispositif

(30) Priorität: 02.04.1990 DE 9003811 U
(43) Veröffentlichungstag der Anmeldung: 09.10.1991
(73) Patentinhaber: SIEGENIA-FRANK KG, 57074 Siegen (DE)
(72) Erfinder: Gerhard, Helmut, W-5900 Siegen (DE)

(56) Entgegenhaltungen:
- DE-A- 2 752 912
- DE-A- 2 835 464
- DE-B- 2 558 998
- GB-A- 2 079 213

## Beschreibung

Die Erfindung betrifft eine Vorrichtung zum Durchtrennen von aus zwei oder mehr aufeinanderliegenden Stangen oder Streifen, insbesondere Flach- oder Bandmaterial, vormontierten Bauteilen, beispielsweise Treibstangen und Stulpschienen von Treibstangenbeschlägen, an verschiedenen, gegeneinander längsversetzten Stellen.

Der Erfindung liegt aber auch eine Verfahrensart zugrunde, die das Durchtrennen solcher vormontierter Bauteile, beispielsweise aus Treibstangen und Stulpschienen bestehender Treibstangenbeschläge ermöglicht, und die sich insbesondere mittels einer solchen Vorrichtung durchführen läßt.

Es kommt oft vor, daß an vormontierten Bauteilen aus zwei oder mehr aufeinanderliegenden Stangen oder Streifen diese Stangen oder Streifen an verschiedenen, gegeneinander längsversetzten Stellen durchtrennt werden müssen. Dieses Erfordernis ergibt sich insbesondere für die Treibstangen und Stulpschienen von Treibstangenbeschlägen, bevor diese in die Flügel von Fenstern, Türen o. dgl. eingebaut werden können.

Bei bekannten Trennvorrichtungen gattungsgemäßer Art besteht die Notwendigkeit, die normalerweise dicht aufeinanderliegenden Stangen oder Streifen, nämlich insbesondere die Treibstangen und Stulpschienen, vor der Durchführung der Trennschnitte voneinander abzuspreizen und dann in verschiedene Arbeitsbereiche der Trennvorrichtung einzuführen.

Damit dabei das Trennwerkzeug eine für den Dauergebrauch genügend große Stabilität erhält, müssen die verschiedenen Arbeitsbereiche einen bestimmten Mindestabstand voneinander aufweisen. Hieraus resultiert dann aber wiederum der Nachteil, daß die Trennvorrichtung nur in solchen Längenbereichen der vormontierten Bauteile eingesetzt werden kann, die noch ein genügend weites Abspreizen der Stangen oder Streifen, insbesondere Treibstange und Stulpschienen, voneinander zulassen. In der Nähe von Funktionsteilen, durch welche die Stangen oder Streifen, insbesondere Treibstangen und Stulpschienen, relativ dicht zusammengehalten werden, sind jedoch diese bekannten Trennvorrichtungen nicht mehr benutzbar. Für die zueinander längsversetzte Durchtrennung der Stangen oder Streifen an solchen Stellen muß daher auf umständliche und zeitraubende Sägearbeiten zurückgegriffen werden.

Der Erfindung liegt die Aufgabe zugrunde, eine gattungsgemäße Vorrichtung und auch ein hiermit durchführbares Verfahren zum Durchtrennen von Stangen oder Streifen, beispielsweise Treibstangen und Stulpschienen, vormontierter Bauteile anzugeben, welche bzw. welches es problemlos ermöglicht, auch gegeneinander längsversetzte Trennschnitte an unmittelbar dicht aufeinanderliegenden Stangen oder Streifen durchzuführen.

Gelöst wird diese Aufgabe nach der Erfindung mit einer gattungsgemäßen Vorrichtung grundsätzlich dadurch,
daß zwei normal zu ihrer Arbeitsrichtung gegeneinander versetzt angeordnete Trennmesser unabhängig voneinander in einem Gestell bzw. Ständer geführt und nacheinander kraftantreibbar sind,
daß jedem Trennmesser im Gestell bzw. Ständer, z.B. auf einem Tisch, eine ortsfeste Stützauflage, insbesondere ein Widerlageramboß für das vormontierte Bauteil, zugeordnet ist,
daß dabei einerseits der Arbeitshub des auf die bzw. den von der Stützauflage entfernt liegende(n) Stange bzw. Streifen einwirkenden, ersten Trennmessers gegenüber der bzw. dem auf dieser Stützauflage ruhenden Stange bzw. Streifen anschlagbegrenzt ist, während andererseits der Arbeitshub des zweiten Trennmessers gegenüber der Stützauflage mindestens auf die Gesamtdicke der beiden aufeinanderliegenden Stangen oder Streifen abgestimmt ist, und daß dem Antrieb für das eine Trennmesser ein - z.B. in seinem Arbeitsweg liegender - Auslöser für den Antrieb des zweiten Trennmesser nachgeordnet ist.

Erfindungsgemäß hat es sich besonders bewährt, wenn die beiden Trennmesser unabhängig voneinander kraftantreibbar sind und wenn dabei dem Kraftantrieb für das eine Trennmesser der Auslöser für den Kraftantrieb des zweiten Trennmessers nachgeordnet ist.

Erfindungsgemäß erweist es sich aber auch als zweckmäßig, wenn der Kraftantrieb für das zweite Trennmesser vom Kraftantrieb für das erste Trennmesser entkoppelt auslösbar und dabei der Kraftantrieb für das erste Trennmesser blockierbar ist. Es ist dann nämlich ohne weiteres möglich, die gattungsgemäße Vorrichtung auch dann in Benutzung zu nehmen, wenn beide Stangen oder Streifen vormontierter Bauteile, nämlich beispielsweise Treibstangen und Stulpschienen von Treibstangenbeschlägen, an der gleichen Stelle - also nicht gegeneinander längsversetzt - durchtrennt werden sollen oder müssen.

Die Erfindung sieht in vorteilhafter Weise ferner vor, daß die Stützauflage für die vormontierte Baueinheit an einem gemeinsamen Widerlageramboß für beide Trennmesser ausgebildet ist.

Damit ein dauerhaft einwandfreier Betrieb der Trennvorrichtung sichergestellt werden kann, ist es neuerungsgemäß weiterhin wichtig, daß mit dem Kraftantrieb des einen Trennmessers ein Auswerfer für das Schrottstück der bzw. des vom Widerlageramboß entfernt liegenden Stange bzw. Streifens gekoppelt ist.

Um einen problemlosen Einsatz der Trennvorrichtung zu ermöglichen, hat es sich nach der Neuerung ferner bewährt, wenn die Kraftantriebe für die Trennmesser aus Druckmittelantrieben, z.B. Druckluft- oder Hydraulik-Antrieben, bestehen. Da fluidische Energie, und zwar insbesondere Druckluft, praktisch in allen modern ausgestatteten Werkstätten verfügbar ist, lassen sich die Trennvorrichtungen dort ohne weiteres in Benutzung nehmen.

Neuerungsgemäß ist es vorteilhaft, wenn auch der Auswerfer mit einem Druckmittelantrieb, z.B. Druckluft- oder Hydraulik-Antrieb versehen ist, wobei dieser unmittelbar an die Auslaßseite des Druckmittelantriebs für das erste Trennmesser angeschlossen werden kann. Er läßt sich daher mit Hilfe des dort abströmenden Druckmittels ausfahren. Zur Rückstellung des Auswerfers in seine Grundstellung kann eine Feder oder auch das von der Auslaßseite des Druckmittelantriebs für das zweite Trennmesser abströmende Druckmittel genutzt werden.

Der Auslöser für den Druckmittelantrieb des zweiten Trennmessers kann nach der Neuerung schließlich aus einem in den Arbeits-Hubweg des Druckmittelantriebs für das erste Trennmesser gelegenen Schaltventil bestehen. Wird dieses Schaltventil dabei als Umschaltventil ausgeführt, dann kann es zugleich auch den Druckmittelantrieb für das erste Trennmesser nach Durchlaufen des Arbeits-Hubweges entlasten und den Druckmittelantrieb des Auswerfers beaufschlagen. Zur Entlastung des Druckmittelantriebs für das zweite Trennmesser kann am Ende des Arbeits-Hubweges desselben ein einfaches Entlastungs-Schaltventil vorgesehen werden.

Ein erfindungsgemäßes Verfahren zum Durchtrennen von aus zwei oder mehr aufeinanderliegenden Stangen oder Streifen, insbesondere Flach- oder Bandmaterial, vormontierten Bauteilen, beispielsweise Treibstangen und Stulpschienen von Treibstangenbeschlägen, das sich - vorteilhaft - mit einer Vorrichtung der vorstehend erläuterten Art durchführen läßt, zeichnet sich in erster Linie dadurch aus,
daß zunächst das vormontierte Bauteil mit vorgegebener Orientierung seine aufeinanderliegenden Stangen oder Streifen gegen eine Stützauflage gesetzt wird,
daß dann ein erster Trennschnitt mit kurzem Schnitthub in Richtung gegen die Stützauflage ausschließlich durch die erste Stange oder den ersten Streifen geführt und dabei gegenüber der zweiten Stange oder dem zweiten Streifen und der Stützauflage begrenzt wird
und daß daraufhin ein zweiter Trennschnitt mit langem Schnitthub seitlich versetzt zum ersten Trennschnitt, ebenfalls in Richtung gegen die Stützauflage sowie mindestens durch die zweite Stange oder den zweiten Streifen ausgelöst und zumindest bis gegen die Stützauflage geführt wird.

In verfahrenstechnischer Hinsicht ist es auch noch vorteilhaft, wenn erst mit dem Ende des ersten Trennschnittes der zweite Trennschnitt ausgelöst wird.

An in der Zeichnung dargestellten Ausführungsbeispielen wird der Gegenstand der Neuerung nachfolgend ausführlich erläutert. Es zeigen die
- Fig. 1 bis 3: in schematisierter Ansicht von vorne eine Vorrichtung zum Durchtrennen von Treibstange und Stulpschiene vormontierter Bauteile bei Treibstangenbeschlägen in drei verschiedenen Funktionsstellungen, die
- Fig. 4 und 5: jeweils in Seitenansicht die Vorrichtung nach den Fig. 1 bis 3 einerseits in der Funktionsstellung nach Fig. 1 und andererseits in einer weiteren Funktionsstellung, die den Funktionsstellungen nach den Fig. 2 und 3 zwischengeschaltet ist,
- Fig. 6: in Ansicht von vorne den Aufbau eines Ablängwerkzeuges für beidendiges Ablängen vormontierter Bauteile von Treibstangenbeschlägen, bei dem zwei Trennvorrichtungen nach den Fig. 1 bis 5 mit einer Ausrichtvorrichtung für vormontierte Bauteile vereinigt sind, während
- Fig. 7: eine Druckmittel-Steuervorrichtung für eine neuerungsgemäße Trennvorrichtung wiedergibt.
- Fig. 8: zeigt eine Hydrauliksteuerung, wie sie beiden Trennvorrichtungen nach Fig. 6 zugeordnet werden kann und in
- Fig. 9: ist eine dem gleichen Zweck dienliche pneumatischhydraulische Steuervorrichtung zu sehen.

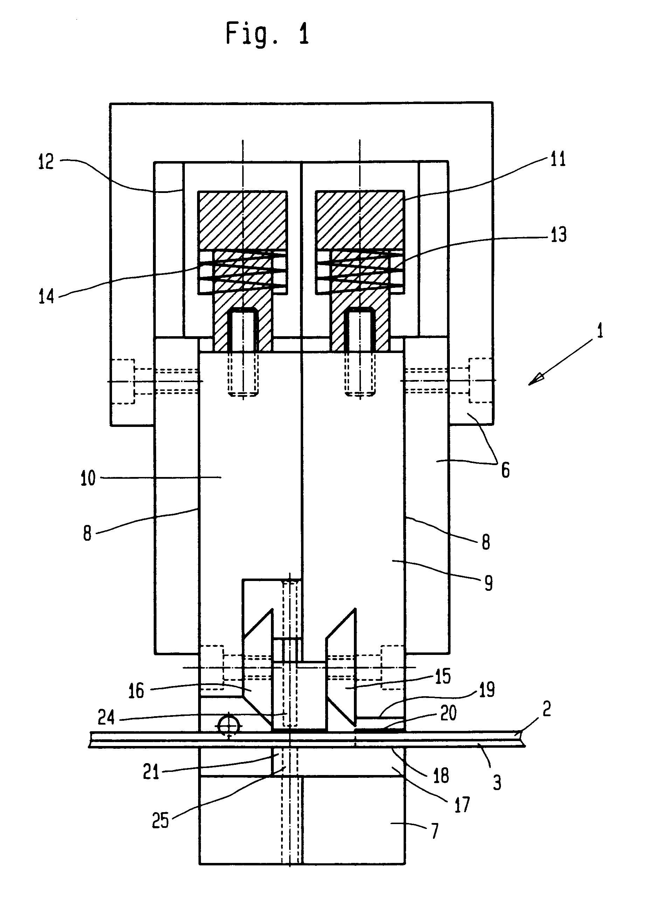

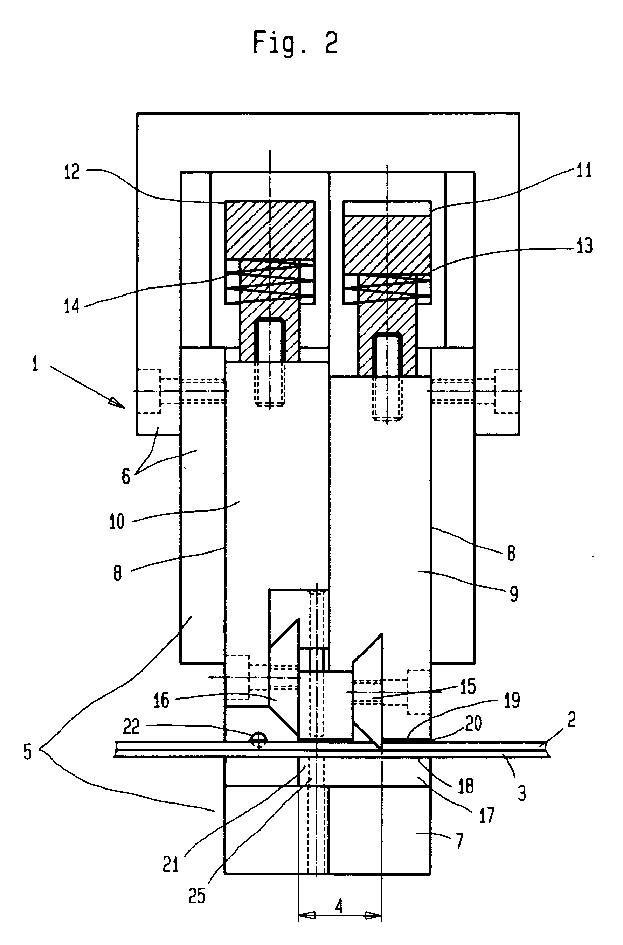

Die in den Fig. 1 bis 5 der Zeichnung dargestellte Trennvorrichtung 1 dient vornehmlich zum Ablängen der vormontierten Bauteile von Treibstangenbeschlägen, die mindestens jeweils eine Treibstange 2 und eine Stulpschiene 3 aus im Querschnitt flach-rechteckigem Bandmaterial umfassen.

Selbstverständlich kann jedoch die Trennvorrichtung 1 auch zum Durchtrennen anderer aus zwei oder mehr aufeinanderliegender Stangen oder Streifen, insbesondere aus Flach- oder Bandmaterial, vormontierter Bauteile eingesetzt werden.

Wesentliches Kriterium ist aber in jedem Falle, daß das Durchtrennen der umittelbar aufeinanderliegenden Treibstangen 2 und Stulpschienen 3 bzw.

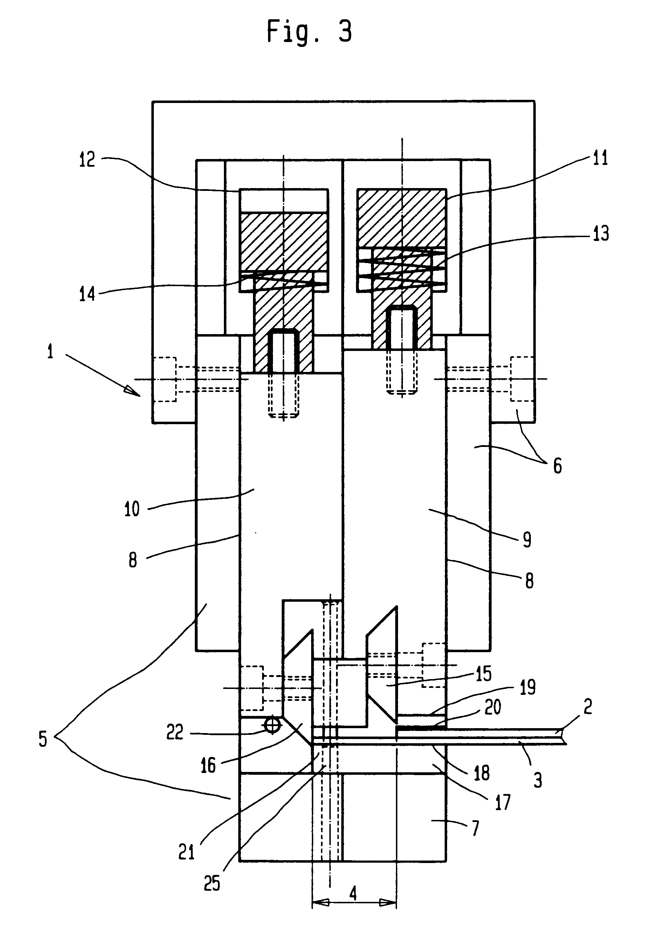

Stangen oder Streifen an verschiedenen, gegeneinander längsversetzten Stellen stattfindet, nämlich in der Weise, daß nach Durchführung der Trennschnitte die Treibstange 2 eine um ein vorgebbares aber festgelegtes Maß 4 gegenüber der Stulpschiene 3 verkürzte Abmessung erhält, wie das insbesondere aus Fig. 3 der Zeichnung ersichtlich ist.

Die Trennvorrichtung 1 weist ein ortsfestes Gestell 5 auf, das aus einem Ständer 6 und einem damit verbundenen Tisch 7 besteht.

Der Ständer 6 hat dabei Führungen 8 für zwei vertikal verschiebbare Stößel 9 und 10, die unabhängig voneinander bewegbar sind und jeweils durch einen eigenen Kraftantrieb 11 und 12 betätigt werden können.

Als Kraftantriebe 11 und 12 für die Stößel 9 und 10 lassen sich vorzugsweise Druckmittelantriebe, beispielsweise Druckluft- oder Hydraulikzylinder, einsetzen, die auf dem Gestell 5 montiert sind und dabei entweder unmittelbar oder aber unter Zwischenschaltung von Hebelübersetzungen auf den zugehörigen Stößel 9 oder 10 einwirken.

Bei dem in der Zeichnung dargestellten Ausführungsbeispiel einer Trennvorrichtung 1 sind als Kraftantriebe 11 und 12 für die Stößel 9 und 10 einfach wirkende Kolben-Zylindereinheiten vorgesehen, deren Kolben in Richtung auf ihre Grund- bzw. Ausgangsstellung zu jeweils unter der Einwirkung einer Rückstellfeder 13 bzw. 14 stehen. Die Druckmittelbeaufschlagung dieser Kraftantriebe 11 und 12 erfolgt also gegen die Kraft der Rückstellfeder 13 bzw. 14 zur Auslösung des Ausbeitshubs für die Stößel 9 und 10.

Am unteren Ende des Stößels 9 ist ein Trennmesser 15 angeordnet, während ein entsprechendes Trennmesser 16 auch am unteren Ende des Stößels 10 sitzt.

Die Schneidkanten dieser beiden Trennmesser 15 und 16 haben dabei an den Stößeln 9 und 10 relativ zueinander eine um das vorgegebene bzw. festgelegte Maß 4 gegeneinander längsversetzte Einbaulage, wie das deutlich aus den Fig. 1 bis 3 der Zeichnung hervorgeht.

Auf dem Tisch 7 des Gestells 5 ist den beiden Trennmessern 15 und 16 ein gemeinsamer Widerlageramboß 17 zugeordnet, der als Stützauflage für die jeweils aus einer Treibstange 2 und einer Stulpschiene 3 vormontierten Bauteile von Treibstangenbeschlägen 26 dient.

Gegenüber der Stützfläche 18 des Widerlageramboß 17 ist der Hubweg für den Stößel 9 durch miteinander in Wirkverbindung tretende Anschläge 19 und 20 begrenzt, und zwar auf ein Maß, bei dem die Schneidkante des Trennmessers 15 von der Stützfläche 18 des Widerlageramboß 17 noch einen Abstand einhält, welcher um ein Minimalmaß größer ist, als die Materialdicke der Stulpschiene 3.

Andererseits ist der Hubweg des das Trennmesser 16 tragenden Stößels 10 mindestens auf die Gesamtdicke von aufeinanderliegender Treibstange 2 und Stulpschiene 3 abgestimmt, daß die Schneidkante des Trennmessers 16 über eine von einer Begrenzungskante des Widerlageramboß 17 gebildete, ortsfeste Schneidkante 21 hinweg nach abwärts fährt.

Im Gestell 5 der Trennvorrichtung 1 ist auch ein quer zur Bewegungsrichtung der Stößel 9 und 10 bzw. der Trennmesser 16 und 16 wirksamer Auswerfer 22 vorgesehen, dessen Bewegungsebene auf Höhe der Treibstange 2 liegt und der durch einen Kraftantrieb 23 antreibbar ist. Auch dieser Kraftantrieb 23 kann von einer druckmittelbeaufschlagten, einfach wirkenden Kolben-Zylindereinheit gebildet werden, die durch eine Rückstellfeder 24 in ihrer Ausgangsstellung gehalten wird.

Durch Betätigung eines Startventils wird zunächst der von einer Kolben-Zylindereinheit gebildete Kraftantrieb 11 mit Druckmittel beaufschlagt und bewegt dadurch den Stößel 9 in Abwärtsrichtung bis dessen Anschlag 19 auf den ortsfesten Anschlag 20 am Ständer 6 bzw. Tisch 7 des Gestells trifft. Dabei wird lediglich die auf der Oberseite der Stulpschiene 3 aufliegende Treibstange 2 von der Schneidkante des Trennmessers 15 durchtrennt.

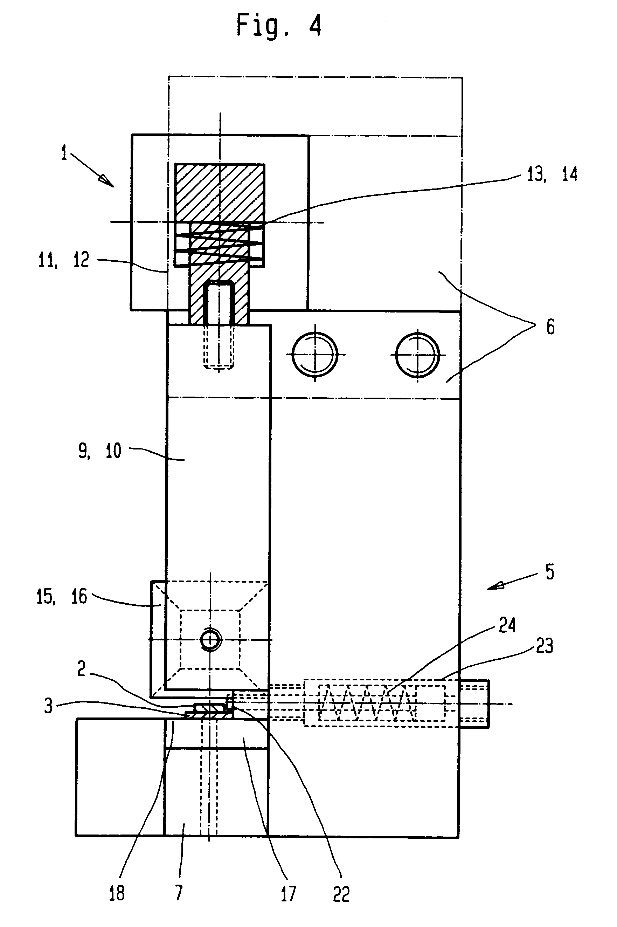

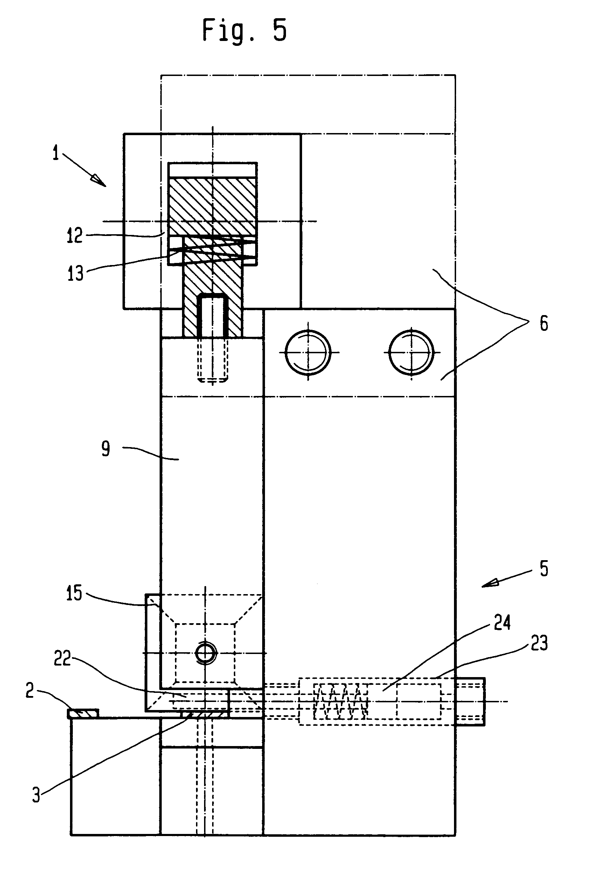

Mit dem Aufeinandertreffen der Anschläge 19 und 20 wird die Kolben-Zylindereinheit des Kraftantriebs 11, beispielsweise durch Öffnen eines Ventils, entlastet und dann durch die Rückstellfeder 13 in ihre Ausgangslage zurückgefahren. Das dabei über das Ventil abströmende Druckmittel wirkt auf den ebenfalls als Kolben-Zylindereinheit ausgeführten Kraftantrieb 23 für den Auswerfer 22 ein, so daß dieser aus seiner Grundstellung nach Fig. 4 in die Arbeitsstellung nach Fig. 5 gelangt und daß abgetrennte Schrottstück der Treibstange 2 von der Oberseite der Stulpschiene 3 abschiebt.

Entweder vom rücklaufenden Kraftantrieb 11 für den Stößel 9 oder aber vom vorlaufenden Kraftantrieb 23 für den Auswerfer 22 kann ein Auslöser, beispielsweise ein Ventil, betätigt werden, der bzw. das den von einer Kolben-Zylindereinheit gebildeten Kraftantrieb 12 für den Stößel 10 für die Durchführung seines Arbeitshubs einschaltet.

Durch die Druckmittelbeaufschlagung des Kraftantriebs 12 wird dann der Arbeitshub des Stößels 10 und damit des zweiten Trennmessers 16 ausgeführt, um dadurch die Stulpschiene 3 zu durchtrennen, wie das in Fig. 3 zu sehen ist.

Am Ende ihres Arbeitshubes wird die den Kraftantrieb 12 für den Stößel 10 und das Trennmesser 16 bildende Kolben-Zylindereinheit von der Druckmittelbeaufschlagung entlastet und durch die Rückstellfeder 14 in ihre Grund- bzw. Ausgangsstellung zurückgefahren. Nunmehr ist die Trennvorrichtung 1 für die Durchführung des nächsten Arbeitszyklus bereit.

Es sei hier noch erwähnt, daß der Stößel 9 für das zweite Trennmesser 16 gleichzeitig auch einen Lochstempel 24 relativ zu einer Lochmatrize 25 im Widerlageramboß 17 bewegen kann, damit im unmittelbaren Anschluß an den Trennschnitt auch noch eine Lochung der Stulpschiene 3 nahe ihrem Endbereich vorgenommen werden kann.

Ferner wird noch hervorgehoben, daß die Trennmesser 15 und 16 jeweils als sogenannte Wende-Schneidplatten mit mehreren nacheinander in Wirkstellung bringbaren Schneidkanten ausgeführt werden können und daß auch der Widerlageramboß 17 längs seinen Begrenzungskanten mit mehreren nacheinander in Wirkstellung bringbaren Schneidkanten 21 und Lochmatrizen 25 ausgestattet werden kann.

Die als Kraftantriebe 11 und 12 für die Stößel 9 und 10 der Trennvorrichtung 1 benutzten Kolben-Zylindereinheiten können entweder durch Druckluft-Beaufschlagung oder aber durch Druckflüssigkeits-Beaufschlagung betrieben werden. Insbesondere im erstgenannten Falle ist es dabei nicht notwendig, die Kolben-Zylindereinheiten unmittelbar auf die Stößel 9 und 10 einwirken zu lassen. Vielmehr können die druckluftbeaufschlagten Kraftantriebe 11 und 12 beispielsweise auch von auf Übersetzungshebel einwirkenden Balgzylindern gebildet werden.

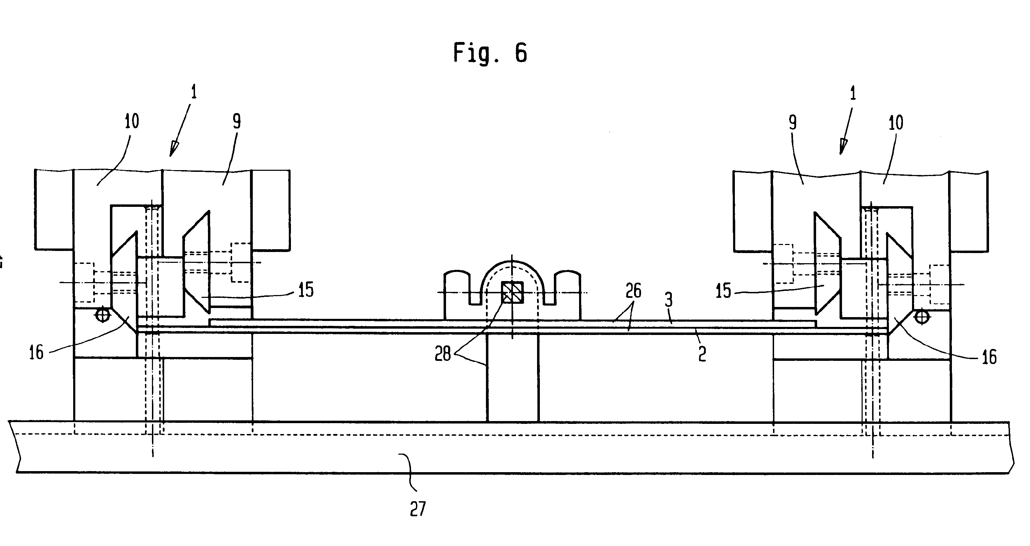

In Fig. 6 der Zeichnung ist zu sehen, daß es mit Hilfe von Trennvorrichtungen 1 auch möglich ist, eine Treibstange 2 und eine Stulpschiene 3 umfassende, vormontierte Bauteile von Treibstangenbeschlägen 26 gleichzeitig an ihren voneinander abgewendeten Enden abzulängen. Zu diesem Zweck werden zwei baugleiche Trennvorrichtungen 1 zueinander spiegelbildlich längs einer Führung 27 ein- und feststellbar vorgesehen. Vorzugsweise trägt dabei die Führung 27 eine Ausricht- und Fixiervorrichtung 28, mit deren Hilfe der abzulängende Treibstangenbeschlag 26 sich für den Ablängvorgang in einer vorgegebenen Grundstellung festlegen läßt.

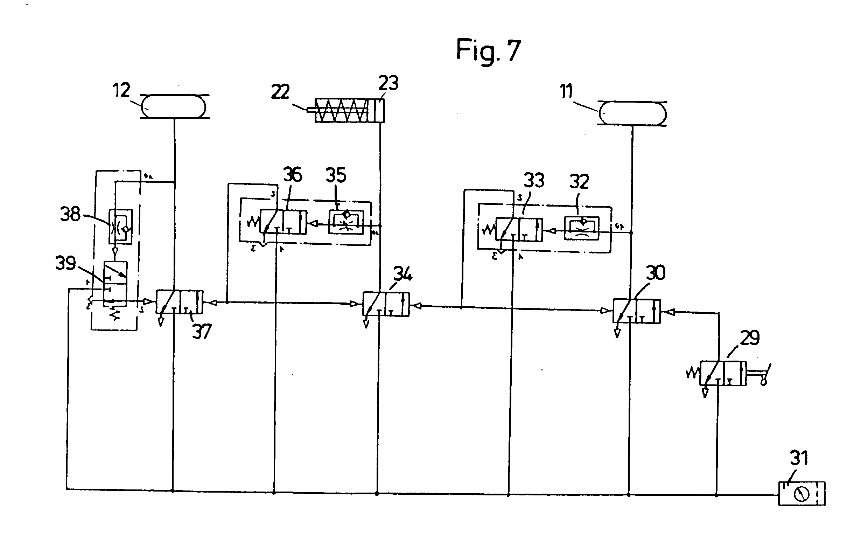

In Fig. 7 der Zeichnung ist noch eine Druckluft-Zyklussteuereinrichtung für Trennvorrichtungen 1 nach den Fig. 1 bis 5 dargestellt, mit deren Hilfe sich über ein, beispielsweise manuell betätigbares, Startventil 29 ein vollständiger Arbeitszyklus auslösen läßt.

Mit Betätigung des Startventils 29 wird ein Impulsventil 30 so umgestellt, daß es den bisher entlüfteten Kraftantrieb 11 mit einer Druckluft-Lieferquelle 31 verbindet.

Gleichzeitig wird vom Impulsventil 30 über ein Drossel-Rückschlagventil 32 ein zeitverzögertes Umschaltventil 33 beaufschlagt. Beim Überschreiten eines vorgegebenen Druckniveaus stellt dieses Umschaltventil eine Verbindung der Druckmittellieferquelle 31 nicht nur mit der Rückseite des Impulsventils 30, sondern auch mit der Vorderseite eines weiteren Impulsventils 34 her. Während ersteres in seine Grundstellung zurückgefahren wird, gelangt letzteres aus der Grundstellung in seine Arbeitsstellung. Es verbindet dadurch den bisher entlüfteten Kraftantrieb 23 für den Auswerfer 22 mit der Druckmittellieferquelle 31, so daß der Auswerfer 22 betätigt wird. Zugleich wird über ein Drossel-Rückschlagventil 35 ein zeitverzögertes Umschaltventil 36 beaufschlagt. Dieses wird dann beim Überschreiten eines bestimmten Druckniveaus aus seiner Grundstellung in die Arbeitsstellung gebracht und stellt eine Verbindung mit der Druckmittellieferquelle 31 her, so daß diese einerseits auf die Rückseite des Impulsventils 34 und andererseits auf die Vorderseite eines weiteren Impulsventils 37 einwirkt. Während ersteres aus seiner Arbeitsstellung in die Grundstellung zurückfährt, gelangt das zweite aus seiner Grundstellung in die Arbeitsstellung. Es schaltet damit eine Verbindung der Druckmittellieferquelle 31 zum Kraftantrieb 12 durch und beaufschlagt darüberhinaus über ein Drossel-Rückschlagventil 38 ein zeitverzögertes Umschaltventil 39. Beim Überschreiten eines vorgegebenen Druckniveaus stellt das Umschaltventil 39 eine Verbindung der Druckmittel-Lieferquelle 31 mit der Rückseite des Impulsventils 37 her und fährt dieses damit aus seiner Arbeitsstellung in die Grundstellung zurück. Ein vollständiger Arbeitszyklus der Trennvorrichtung 1 ist damit abgeschlossen.

Jeweils dann, wenn die Impulsventile 30, 34 und 37 aus ihrer Arbeitsstellung in ihre Grundstellung zurückgefahren werden, kommt eine Entlüftung der Kraftantriebe 11, 23, 12 zustande, so daß die ihnen zugeordneten Rückstellfedern 13, 24, 14 ihre Wirkung entfalten und folglich die Kraftantriebe 11, 23 und 12 in ihre Grundstellung zurückfahren.

Zur Einleitung eines neuen Arbeitszyklus ist jeweils wieder lediglich die Betätigung des Startventils 29 notwendig.

Der Auswerfer 22 sowie der ihm zugeordnete Kraftantrieb 23 können auch eingespart werden, wenn die Trennvorrichtungen 1 so aufgestellt sind, daß die Fig. 1 bis 3 und 6 der Zeichnung jeweils eine Draufsicht derselben zeigen. In diesem Falle haben dann die Trennmesser 15 und 16 jeweils eine horizontale Arbeitsrichtung, so daß die bei jedem Trennschnitt entstehenden Schrottstücke selbsttätig aus dem Arbeitsbereich der Trennvorrichtungen 1 fallen.

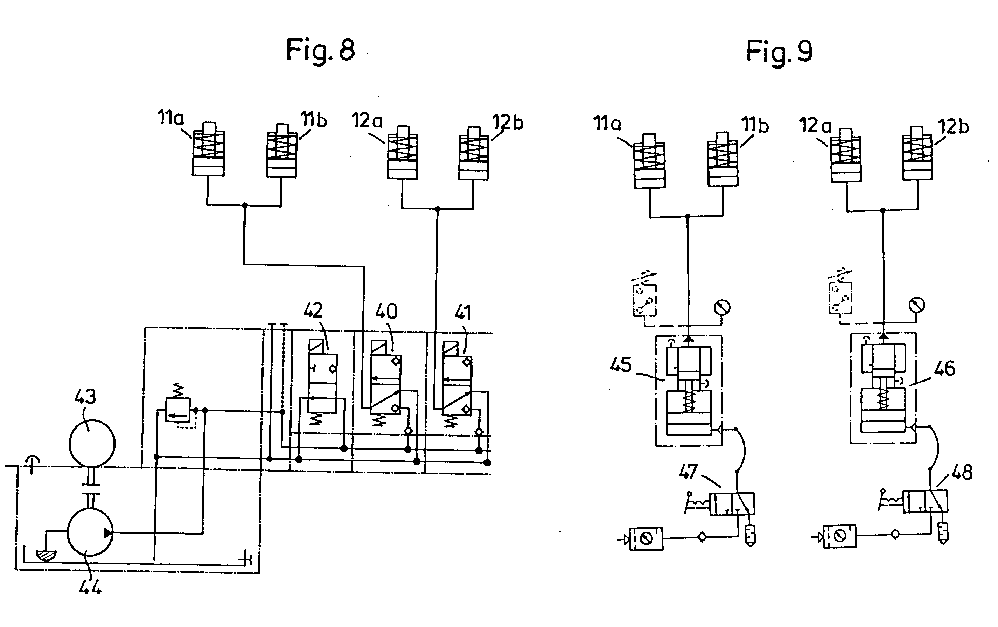

Während in der bereits vorstehend abgehandelten Fig. 7 eine Druckluft-Zyklussteuereinrichtung für nur eine der beiden Trennvorrichtungen 1 nach Fig. 6 dargestellt ist, zeigt Fig. 8 eine Hydrauliksteuerung, die mit beiden Trennvorrichtungen 1 nach Fig. 6 zusammenarbeitet.

Zu sehen sind in Fig. 8 die Kraftantriebe 11a und 11b für die Trennmesser 15 und die Kraftantriebe 12a und 12b für die Trennmesser 16. Angesteuert werden die Kraftantriebe 11a und 11b gemeinsam durch das Impulsventil 40, während zur gemeinsamen Ansteuerung der Kraftantriebe 12a und 12b das Impulsventil 41 vorgesehen ist.

Vorgeordnet ist den beiden Impulsventilen 40 und 41 noch ein weiteres Impulsventil 42, das als Hauptventil arbeitet und die Druckmittelzufuhr von dem durch die Pumpe 43 beaufschlagten Speicher 44 je nach Bedarf entweder durchschaltet oder unterbricht.

Eine pneumatisch-hydraulische Steuerung für die beiden Trennvorrichtungen 1 nach Fig. 6 ist schließlich noch in Fig. 9 zu sehen. Hier werden sowohl die Kraftantriebe 11a und 11b als auch die Kraftantriebe 12a und 12b hydraulisch betätigt, und zwar jeweils über einen Druckübersetzer 45 bzw. 46, welcher sekundärseitig einer Druckluftbeaufschlagung unterliegt, die jeweils über ein Impulsventil 47 bzw. 48 freigegeben bzw. unterbrochen werden kann.

Die Reihenfolge der Ansteuerung für die Impulsventile 40 und 41 nach Fig. 8 sowie 47 und 48 nach Fig. 9 ist normalerweise - z.B. elektrisch - so abgestimmt, daß immer zuerst die Kraftantriebe 11a und 11b und dann die Kraftantriebe 12a und 12b ausgelöst werden.

Mit den vorstehend anhand der Fig. 1 bis 9 beschriebenen Trennvorrichtungen wird so gearbeitet, daß zunächst das vormontierte Bauteil eines Treibstangenbeschlages 26 mit vorgegebener Orientierung seiner Treibstange 2 und Stulpschiene 3 gegen die Stützfläche 18 gesetzt wird. Dann findet ein erster Trennschnitt mit kurzem Schnitthub in Richtung gegen die Stützfläche 18 durch das Trennmesser 15 statt, der lediglich durch die Treibstange 2 geführt, aber gegen die Stulpschiene 3 und die Stützfläche 18 hin begrenzt wird. Daraufhin wird dann ein zweiter Trennschnitt mit langem Schnitthub durch die Trennmesser 16 ebenfalls in Richtung gegen die Stützfläche 18 ausgelöst, der durch die Stulpschiene 3 und zumindest bis gegen die Stützfläche 18 geht.

Frühestens mit dem Ende des ersten Trennschnittes, vorzugsweise aber etwas zeitverzögert hiernach wird jeweils der zweite Trennschnitt ausgelöst.

## Patentansprüche

1. Vorrichtung zum Durchtrennen von aus zwei oder mehr aufeinanderliegenden Stangen oder Streifen, insbesondere Flach- oder Bandmaterial, vormontierten Bauteilen, beispielsweise Treibstangen (2) und Stulpschienen (3) von Treibstangenbeschlägen (26), an verschiedenen, gegeneinander längsversetzten (4) Stellen (15 und 16),
dadurch gekennzeichnet,
daß zwei normal zu ihrer Arbeitsrichtung gegeneinander versetzt (4) angeordnete Trennmesser (15 und 16) unabhängig voneinander bewegbar in einem Gestell (5) bzw. Ständer (6) geführt (8) und nacheinander kraftantreibbar (11 bzw. 12) sind,
daß jedem Trennmesser (15 und 16) im Gestell (5) bzw. Ständer (6), z.B. auf einem Tisch (7), ein ortsfester Stützanschlag (18), insbesondere ein Widerlageramboß (17) für das vormontierte Bauteil (2, 3), zugeordnet ist,
daß dabei einerseits der Arbeitshub des auf die bzw. den von der Stützfläche (18) entfernt liegende(n) Stange bzw. Streifen (Treibstange 2) einwirkenden, ersten Trennmessers (15) gegenüber der bzw. dem auf dieser Stützauflage (18) ruhenden Stange bzw. Streifen (Stulpschiene 3) anschlagbegrenzt ist (19, 20),
während andererseits der Arbeitshub des zweiten Trennmessers (16) gegenüber der Stützauflage (18) mindestens auf die Gesamtdicke der beiden aufeinanderliegenden Stangen oder Streifen (Treibstange 2 und Stulpschiene 3) abgestimmt ist,
und daß dem Antrieb (11) für das eine Trennmesser (15) ein - z.B. in seinem Arbeitsweg liegender - Auslöser für den Antrieb (12) des zweiten Trennmessers (16) nachgeordnet ist.

2. Vorrichtung nach Anspruch 1,
dadurch gekennzeichnet,
daß die beiden Trennmesser (15 und 16) getrennt bzw. unabhängig voneinander kraftantreibbar (11 bzw. 12) sind.

3. Vorrichtung nach einem der Ansprüche 1 und 2,
dadurch gekennzeichnet,
daß dem Kraftantrieb (11) für das eine Trennmesser (15) der Auslöser für den Kraftantrieb (12) des zweiten Trennmessers (16) nachgeordnet ist.

4. Vorrichtung nach einem der Ansprüche 1 bis 3,
dadurch gekennzeichnet,
daß der Kraftantrieb (12) für das zweite Trennmesser (16) vom Kraftantrieb (11) für das erste Trennmesser (15) entkoppelt auslösbar und dabei der Kraftantrieb (11) für das erste Trennmesser (15) blockierbar ist.

5. Vorrichtung nach Anspruch 1,
dadurch gekennzeichnet,
daß die Stützauflage (18) für die vormontierten Bauteile (2, 3) an einem gemeinsamen Widerlageramboß (17) für beide Trennmesser (15 und 16) ausgebildet ist,
wobei dem Widerlageramboß (17) für die Schneidkante des zweiten Trennmessers (16) eine ortsfeste Schneidkante (21) zugeordnet ist.

6. Vorrichtung nach Anspruch 1 und 2,
dadurch gekennzeichnet,
daß mit dem Kraftantrieb (11) des einen Trennmessers (15) ein Auswerfer (22) für das Schrottstück der bzw. des vom Widerlageramboß (17) entfernt liegenden Stange bzw. Streifens (Treibstange 2) gekoppelt ist.

7. Vorrichtung nach einem der Ansprüche 1 bis 6,
dadurch gekennzeichnet,
daß die Kraftantriebe (11 und 12) für die Trennmesser (15 und 16) aus Druckmittelantrieben, z.B. Druckluft- oder Druckflüssigkeitsantrieben bestehen.

8. Vorrichtung nach einem der Ansprüche 1 bis 7,
dadurch gekennzeichnet,
daß auch der Auswerfer (22) mit einem Druckmittelantrieb (23), z.B. einem Druckluft- oder Druckflüssigkeitsantrieb, versehen ist.

9. Vorrichtung nach einem der Ansprüche 1 bis 8,
dadurch gekennzeichnet,
daß der Druckmittelantrieb (23) des Auswerfers (22) an die Auslaßseite des Druckmittelantriebs (11) für das erste Trennmesser (15) angeschlossen ist.

10. Vorrichtung nach einem der Ansprüche 1 und 3,
dadurch gekennzeichnet,
daß der Auslöser für den Druckmittelantrieb (12) des zweiten Trennmessers (16) aus einem im Arbeits-Hubweg des Druckmittelantriebs (11) für das erste Trennmesser (15) gelegenen Schaltventil besteht.

11. Vorrichtung nach einem der Ansprüche 1 und 5,
dadurch gekennzeichnet,
daß die Trennmesser (15 und 16) aus Wendeschneidplatten bestehen und auch der Widerlageramboß (17) entlang seiner Umfangsbegrenzung mit mehreren Schneidkanten (21) ausgestattet ist.

12. Vorrichtung nach einem der Ansprüche 1 bis 11,
dadurch gekennzeichnet,
daß zwei Trennvorrichtungen (1) in zueinander spiegelbildlicher Lage längs einer Führung (27) relativ zueinander sowie relativ zu einer Ausricht- und Fixiervorrichtung (28) für einen Treibstangenbeschlag (26) ein- und feststellbar angeordnet sind (Fig. 6).

13. Verfahren zum Durchtrennen von aus zwei oder mehr aufeinanderliegenden Stangen oder Streifen, insbesondere Flach- oder Bandmaterial, vormontierten Bauteilen, beispielsweise Treibstangen (3) und Stulpschienen (4) von Treibstangenbeschlägen (26), an verschiedenen, gegeneinander längsversetzten (4) Stellen (15 und 16),
insbesondere mittels einer Vorrichtung nach einem oder mehreren der Ansprüche 1 bis 12,
dadurch gekennzeichnet,
daß zunächst das vormontierte Bauteil (2, 3), insbesondere der Treibstangenbeschlag (26), mit vorgegebener Orientierung seiner aufeinanderliegenden Stangen oder Streifen (2 und 3) gegen eine Stützauflage (18) gesetzt wird,
daß dann ein erster Trennschnitt (15, 11) mit kurzem Schnitthub in Richtung gegen die Stützauflage (18) ausschließlich durch die erste Stange oder den ersten Streifen (2) geführt und dabei gegenüber der zweiten Stange oder dem zweiten Streifen (3) und der Stützauflage (18) begrenzt wird (19, 20),
und daß daraufhin ein zweiter Trennschnitt (16, 12) mit langem Schnitthub seitlich versetzt (4) zum ersten Trennschnitt (15, 11) ebenfalls in Richtung gegen die Stützauflage (18) mindestens durch die zweite Stange oder den zweiten Streifen (3) ausgelöst und dabei zumindest bis gegen die Stützauflage (18) geführt wird.

14. Verfahren nach Anspruch 13,
dadurch gekennzeichnet,
daß mit oder nach dem Ende des ersten Trennschnittes (15, 11) der zweite Trennschnitt (16, 12) ausgelöst wird.

15. Verfahren nach einem der Ansprüche 13 und 14,
dadurch gekennzeichnet,
daß der erste Trennschnitt (15, 11) blockiert und dabei der zweite Trennschnitt (16, 12) aufeinanderfolgend durch die erste Stange oder den ersten Streifen (2) und die zweite Stange oder den zweiten Streifen (3) in Richtung gegen die Stützauflage (18) geführt wird.

## Claims

1. An apparatus for parting off at various longitudinally offset (4) places (15, 16) components preassembled from two or more bars or strips disposed one on another, more particularly flat or strip material, for example, positioning bars (2) and faceplates (3) of positioning bar fittings (26),
characterised in that
two cutters (15, 16) offset (4) from one another perpendicularly to their operative direction are guided (8) for movement independently of one another in a frame (5) or upright (6) and are adapted to be powered (11, 12 respectively) consecutively,
a stationary abutment surface (18), more particularly an anvil (17) for the preassembled component (2, 3) is associated with each cutter (15, 16) in the frame (5) or upright (6), for example, on a table (7),
the operative stroke of the first cutter (15) acting on the rod or strip (positioning bar 2) remote from the abutment surface (18) is limited by abutments (19, 20) relatively to the rod or strip (faceplate 3) resting on the abutment surface (18),
whereas the operative stroke of the second cutter (16) relatively to the abutment surface (18) is adapted at least to the total thickness of the two superjacent rods or strips (positioning bar 2 and faceplate 3),
a trigger for the drive (12) of the second cutter (16) is disposed after the drive (11) for the first cutter (15), the trigger being disposed, for example, in the operative path of the first cutter (15).

2. An apparatus according to claim 1,
characterised in that
the two cutters (15, 16) can be powered (11, 12 respectively) separately or independently of one another.

3. An apparatus according to claim 1 or 2,
characterised in that
the trigger for the power drive (12) of the second cutter (16) is disposed after the power drive (11) for the first cutter (15).

4. An apparatus according to any one of claims 1 to 3,
characterised in that
the power drive (12) for the second cutter (16) is triggerable separately from the power drive (11) for the first cutter (15) and the latter drive (11) is lockable.

5. An apparatus according to claim 1,
characterised in that
the abutment surface (18) for the preassembled components (2, 3) is devised on a common anvil (17) for the two cutters (15, 16),
a stationary cutting edge (21) being associated with the anvil (17) for the cutting edge of the second cutter (16).

6. An apparatus according to claims 1 and 2,
characterised in that
an ejector (22) for the scrap of the rod or strip (positioning bar 2) remote from the anvil (17) is coupled with the power drive (11) of the first cutter (15).

7. An apparatus according to any of claims 1 to 6,
characterised in that
the power drives (11, 12) for the cutters (15, 16) are in the form of pressure medium drives, e.g. pneumatic or hydraulic drives.

8. An apparatus according to any of claims 1 to 7,
characterised in that
the ejector (22) also has a pressure medium drive (23), e.g. a pneumatic or hydraulic drive.

9. An apparatus according to any one of claims 1 to 8,
characterised in that
the pressure medium drive (23) of the ejector (22) is connected to the outlet side of the pressure medium drive (11) for the first cutter (15).

10. An apparatus according to claim 1 or 3,
characterised in that
the trigger for the pressure medium drive (12) of the second cutter (16) is in the form of a switching valve disposed in the path of the operative movement of the pressure medium drive (11) for the first cutter (15).

11. An apparatus according to claim 1 or 5,
characterised in that
the cutters (15, 16) are in the form of indexable inserts and the anvil (17) has a number of cutting edges (21) along its peripheral boundary.

12. An apparatus according to any one of claims 1 to 11,
characterised in that
two cutting apparatuses (1) are adjustably and lockably disposed in mirror image relationship to one another along a guide (27) for adjustment and location relatively to one another and to aligning and fixing means (28) for a positioning bar fitting (26) (Fig. 6).

13. A method of parting off at various longitudinally offset (4) places (15, 16) components preassembled from two or more bars or strips disposed one on another, more particularly flat or strip material, for example, positioning bars (2) and faceplates (3) of positioning bar fittings (26), more particularly by means of an apparatus according to one or more of claims 1 to 12,
characterised in that
the preassembled component (2, 3), more particularly the positioning bar fitting (26), is initially placed with a predetermined orientation of its superjacent rods or strips (2, 3) on an abutment surface (18),
whereafter a first parting cut (15, 11) with a short stroke is made towards the abutment surface (18) solely through the first rod or first strip (2), such stroke being limited (19, 20) relatively to the second rod or second strip (3) and the abutment surface (18),
whereafter a second parting cut (16, 12) with a long stroke and with a lateral offset (4) from the first parting cut (15, 11) and towards the abutment surface (18) is triggered at least through the second rod or second strip (3) and executed at least as far as the abutment surface (18).

14. A method according to claim 13,
characterised in that
the second parting cut (16, 12) is triggered simultaneously with or after the end of the first parting cut (15, 11).

15. A method according to claim 13 or 14,
characterised in that
the first parting cut (15, 11) is blocked and the second parting cut (16, 12) is performed consecutively through the first rod or first strip (2) and the second rod or second strip (3) towards the abutment surface (18).

## Revendications

1. Un dispositif destiné à sectionner en différents emplacements (15 et 16) décalés longitudinalement (4) des éléments pré-assemblés qui sont constitués de deux ou plusieurs tiges ou bandes superposées, en particulier des matériaux plats ou de feuillards, et consistent par exemple en tiges d'entraînement (2) ou rails de revers (3) faisant partie de ferrures à tiges d'entraînement (26),
ce dispositif étant caractérisé
par le fait que deux couteaux de sectionnement (15 et 16) disposés normalement de manière mutuellement décalée (4) par rapport à leur direction de travail sont susceptibles d'être mus indépendamment l'un de l'autre en étant guidés (8) dans un bâti (5) ou support (6) et peuvent être entraînés mécaniquement (11 et 12) l'un après l'autre;
par le fait que chaque couteau de sectionnement (15 et 16) installé dans le bâti (5) ou sur le support (6) - par exemple une table (7) - est doté d'une butée d'appui (18), en particulier une enclume de contre-support (17) destinée à accueillir l'élément pré-assemblé (2, 3);
par le fait que, d'une part, la course de travail du premier couteau de sectionnement (15), qui agit sur la tige ou la bande (tige d'entraînement 2) située à l'écart de la surface d'appui (18), est limitée au moyen d'une butée (19, 20) par rapport à la tige ou bande (rails de revers 3) qui repose sur ce support de repos (18),
tandis que, d'autre part, la course de travail du second couteau de sectionnement (16) par rapport au support de repos (18) est déterminée au moins d'après l'épaisseur totale des deux barres ou bandes superposées (tige d'entraînement 2 et rails de revers 3);
et par le fait que l'entraînement (11) de l'un des couteaux de sectionnement (15) est équipé d'un déclencheur situé, par exemple, sur son itinéraire de travail et destiné à provoquer l'entraînement (12) du second couteau de sectionnement (16).

2. Un dispositif selon la revendication 1,
caractérisé
par le fait que les deux couteaux de sectionnement (15 et 16) peuvent être entraînés mécaniquement (11 ou 12) de manière distincte ou mutuellement indépendante.

3. Un dispositif selon une des revendications 1 et 2,
caractérisé
par le fait que l'entraînement mécanique (11) de l'un des couteaux de sectionnement (15) a été doté du déclencheur de l'entraînement mécanique (12) destiné au second couteau de sectionnement (16).

4. Un dispositif selon une des revendications 1 à 3,
caractérisé
par le fait que l'entraînement mécanique (12) destiné au second couteau de sectionnement (16) peut être déclenché lorsqu'il est déconnecté de l'entraînement mécanique (11) du premier couteau de sectionnement (15) et que, dans ce cas, l'entraînement mécanique (11) destiné au premier couteau de sectionnement (15) peut être bloqué.

5. Un dispositif selon la revendication 1,
caractérisé
par le fait que le support de repos (18) qui accueille les éléments pré-assemblés (2, 3) est formé sur une enclume de contre-support (17) destinée aux deux couteaux de sectionnement (15 et 16),
cette enclume de contre-support (17) étant pourvue d'un tranchant (21) fixe correspondant au tranchant du second couteau de sectionnement (16).

6. Un dispositif selon les revendications 1 et 2,
caractérisé
par le fait qu'on a associé à l'entraînement mécanique (11) destiné au premier couteau de sectionnement (15) un éjecteur (22) pour le morceau de déchet de la tige ou bande située à l'écart de l'enclume de contre-support (17).

7. Un dispositif selon une des revendications 1 à 6,
caractérisé
par le fait que les entraînements mécaniques (11 et 12) destinés aux couteaux de sectionnement (15 et 16) consistent en entraînements à élément comprimé, par exemple des entraînements à air comprimé ou à fluide sous pression.

8. Un dispositif selon une des revendications 1 à 7,
caractérisé
par le fait que l'éjecteur (22) est doté d'un entraînement à élément comprimé, par exemple un entraînement à air comprimé ou à fluide sous pression.

9. Un dispositif selon une des revendications 1 à 8,
caractérisé
par le fait que l'entraînement à élément comprimé (23) de l'éjecteur se raccorde au côté de sortie de l'entraînement à élément comprimé (11) destiné au premier couteau de sectionnement (15).

10. Un dispositif selon une des revendications 1 et 3,
caractérisé
par le fait que le déclencheur destiné à l'entraînement par élément comprimé (12) du second couteau de sectionnement (16) est constitué d'un relais pneumatique placé sur la course de travail de l'entraînement à élément comprimé (11) destiné au premier couteau de sectionnement (15).

11. Un dispositif selon une des revendications 1 et 5,
caractérisé
par le fait que les couteaux de sectionnement (15 et 16) sont constitués de plaquette de coupe amovibles, tandis que l'enclume de contre-support (17) est également munie de plusieurs tranchants (21) le long de sa circonférence.

12. Un dispositif selon une des revendications 1 à 11,
caractérisé
par le fait que deux dispositifs de sectionnement (1) sont disposés, d'une manière qui permette de les régler et de les fixer, le long d'un guide (27) en position symétrique l'un par rapport à l'autre ainsi que par rapport à un dispositif d'orientation et de fixation (28) destiné à accueillir une ferrure à tige d'entraînement (26) (fig. 6).

13. Un dispositif destiné à sectionner en différents emplacements (15 et 16) décalés longitudinalement (4) des éléments pré-assemblés qui sont constitués de deux ou plusieurs tiges ou bandes superposées, en particulier des matériaux plats ou de feuillards, et consistent par exemple en tiges d'entraînement (2) ou rails de revers (3) faisant partie de ferrures à tiges d'entraînement (26),
ce dispositif étant caractérisé
par le fait que l'on commence par placer contre le support de repos (18) l'élément pré-assemblé (2, 3), en particulier la ferrure à tige d'entraînement (26), en donnant à ses tiges ou bandes (2 ou 3) superposées une orientation pré-déterminée;
par le fait que la première coupe de sectionnement (15, 11), à course courte, est ensuite effectuée en direction du support de repos (18) de manière à ne sectionner que la première tige ou bande (2), et à avoir comme limite (19, 20) la deuxième tige ou bande (3) et le support de repos (18);
et par le fait qu'avec un décalage latéral (4) par rapport à la première coupe de sectionnement (15, 11), on déclenche une seconde coupe de sectionnement (16, 12) à course longue, en la dirigeant également vers le support de repos (18) et en sectionnant alors au moins la seconde tige ou bande (3), cette coupe de sectionnement (15, 11) étant alors effectuée de manière à au moins atteindre le support de repos (18).

14. Un dispositif selon la revendication 13,
caractérisé
par le fait que la seconde coupe de sectionnement (16, 12) est déclenchée concomitamment ou postérieurement à l'achèvement de la première coupe de sectionnement (15, 11).

15. Un dispositif selon une des revendications 1 à 11,
caractérisé
par le fait que la première coupe de sectionnement (15, 11) se bloque et qu'à ce moment, la seconde coupe de sectionnement (16, 12) est effectuée successivement à travers la première (2) et la seconde (3) tige ou bande.
